# EUROPÄISCHE PATENTSCHRIFT

(11) **EP 4 644 146 B1**
(45) Veröffentlichungstag und Bekanntmachung des Hinweises auf die Patenterteilung: **24.06.2026**
(21) Anmeldenummer: 25163244.4
(22) Anmeldetag: 12.03.2025
(51) Int. Cl.: B60J 7/16

(54) **DACHLUKENVORRICHTUNG**
ROOF HATCH DEVICE
DISPOSITIF DE TRAPPE DE TOIT

(30) Priorität: 03.05.2024 LU 103292
(43) Veröffentlichungstag der Anmeldung: 05.11.2025
(73) Patentinhaber: KCT GmbH & Co. KG, 72348 Rosenfeld (DE)
(72) Erfinder: KRUMM, Achim, 72348 Rosenfeld (DE)
(74) Vertreter: Paustian & Partner Patentanwälte mbB

(56) Entgegenhaltungen:
- EP-A1- 0 246 904
- EP-B1- 0 094 257

## Beschreibung

Die vorliegende Erfindung bezieht sich auf Fahrzeugluken. Insbesondere bezieht sich die vorliegende Erfindung auf eine (Fahrzeug-)Dachlukenvorrichtung.

Fahrzeugdachluken werden herkömmlicherweise im Fahrzeugbau eingesetzt, wenn ein (wieder-)verschließbarer Zugang zu einem Fahrzeuginnenraum zumeist in einem Fahrzeugdach geschaffen werden soll. Solcher Fahrzeugdachluken sind z.B. aus EP 0 246 904 A1 oder EP 0 094 257 B1 bekannt.

Auch im Bootsbau werden gattungsgemäße Luken verwendet, z.B. bei Yachten als Decksluken. Dabei werden Fahrzeugdachluken oft mit einem transparenten Einsatz wie Kunststoff oder Glas versehen um z.B. bei Campingfahrzeugen Licht ins Innere des Fahrzeugs zu lassen. Da die Dachluken durch ihr Eigengewicht bedingt gerade bei einem Einbau im Dach zu fallen, sind Vorrichtungen notwendig um diese geöffnet zu halten. Bei den verwendeten Ausstellern wird hauptsächlich in zwei Arten unterschieden, in die Aussteller mit festgelegten Arretierungspositionen und Aussteller, die bezüglich ihrer Arretierungsposition variabel/frei wählbar einstellbar sind. Bekannte Aussteller mit variabler Arretierungsposition (im Folgenden variable Aussteller genannt) weisen ein Bedienelement auf (z.B. einen Hebel oder einen Knopf auf), mit welchem z.B. bei einem variablen Gasdruckaussteller das Ventil des Gasdruckverstellmechanismus bedient werden kann. Die Verwendung von variablen Ausstellern mit Bedienelement hat den Nachteil, dass mit einer Hand die Dachluke (z.B. an einem Dachlukengriff) gehalten und mit der anderen Hand das Bedienelement des variablen Ausstellers bedient werden muss. Dies kann unter Umständen unkomfortabel und/oder umständlich sein.

Die vorliegende Anmeldung hat es daher zur Aufgabe eine Dachluken- bzw. Deckslukenvorrichtung bzw. Lukenvorrichtung bereit zu stellen, welche eine einfache Bedienung ermöglicht. Dies wird mit einer Dachlukenvorrichtung bzw. Lukenvorrichtung gemäß dem unabhängigen Anspruch erreicht.

Nach einem Aspekt der vorliegenden Anmeldung umfasst eine Dachluken- bzw. Deckslukenvorrichtung einen Rahmen und einen damit beweglich verbundenen Deckel, einen variablen Aussteller mit zumindest einem Ventil. Der variable Aussteller ist mit dem Rahmen und dem Deckel verbunden. Weiterhin umfasst die Dachlukenvorrichtung einen mit dem Deckel verbundenen Griff, wobei ein erster Bediendruck des Ventils in Abhängigkeit von einer Bedienkraft am Griff eingestellt ist. Das Ventil ist ein Steuerventil innerhalb des variablen Ausstellers, mit welchem die Strömung eines Fluids im variablen Aussteller gesteuert wird, welches zur Funktion des variablen Ausstellers benötigt wird, sowie dies bekannt ist. Durch unterschiedliche Deckel- bzw. Dachlukengrößen sind die Deckel unterschiedlich schwer und benötigen unterschiedliche Stärken/Größen von variablen Ausstellern, was wiederum unterschiedliche Ventile in den variablen Aussteller bedingt. Auch die Anordnung des Griffs am Deckel spielt eine Rolle, da auch die auftretenden Hebelverhältnisse (z.B. Abstand von Griff zu variablem Aussteller) Einfluss auf den Bediendruck des Ventils im variablen Aussteller hat. Der Bediendruck ist der Druck, der aufgewendet werden muss, um das Ventil im variablen Aussteller zu schalten. Dieser Bediendruck hängt mit der aufzuwendenden Kraft am Griff zusammen und ist bestimmt somit wie leicht die Dachlukenvorrichtung bedient werden kann. Der Bediendruck kann fest eingestellt sein, oder durch ein Verstellelement geändert werden. Es können auch mehrere Ventile (z.B. für Öffnen und Schließen bzw. für jede Bewegungsrichtung des variablen Ausstellers) verwendet werden. Der variable Aussteller ist ohne Bedienelement (siehe oben).

Nach einem Aspekt der vorliegenden Anmeldung ist bei einer Dachlukenvorrichtung ein erster Bediendruck des Ventils in Abhängigkeit von einer Zugkraft am Griff eingestellt und ein zweiter Bediendruck des Ventils ist in Abhängigkeit von einer Druckkraft am Griff eingestellt. Somit kann der Bedienkomfort besser angepasst werden, da nicht notwendigerweise die gleiche Kraft aufgewendet werden soll und/oder muss, um den Deckel zuzuziehen oder aufzudrücken.

Zum besseren Verständnis der Erfindung wird diese anhand der nachfolgenden Figur näher erläutert. Sie zeigt jeweils in stark vereinfachter, schematischer Darstellung eine Seitenansicht einer Dachlukenvorrichtung.

Einführend sei festgehalten, dass die in der Beschreibung gewählten Lageangaben, wie z.B. oben, unten, seitlich usw. auf die unmittelbar beschriebene sowie dargestellte Figur bezogen sind und es sind diese Lageangaben bei einer Lageänderung sinngemäß auf die neue Lage zu übertragen.

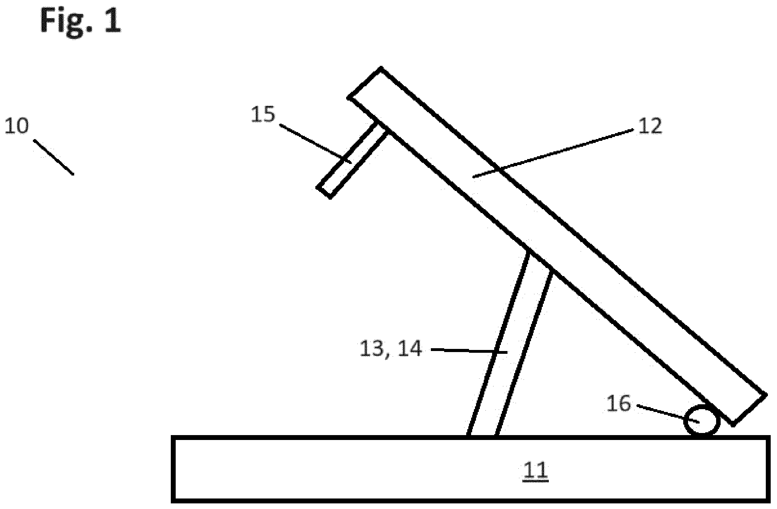

Figur 1 zeigt eine schematische Darstellung einer Dachlukenvorrichtung in Seitenansicht.

Unter Bezugnahme auf Fig. 1 ist eine Dachlukenvorrichtung bzw. Lukenvorrichtung 10 dargestellt, welche einen Rahmen 11 und einen damit über ein Scharnier 16 beweglich verbundenen Deckel 12 umfasst. Weiterhin ist am Deckel ein Griff 15 befestigt, mit welchem der Deckel 12 auf bekannte Art und Weise bedient bzw. geöffnet und geschlossen werden kann. Ein variabler Aussteller 13 mit einem Ventil 14 (nicht gezeigt, da innenliegend) ist sowohl mit dem Deckel 12 als auch mit dem Rahmen11 verbunden.

Das Ventil 14 steuert den variablen Aussteller 13 der Gestalt, dass zum Öffnen und Schließen am Griff jeweils ein Bediendruck aufgebracht werden muss, damit das Ventil 14 betätigt wird, einem Fluid im variablen Aussteller 13 den Weg frei gibt und der Aussteller in die entsprechende Richtung bewegt werden kann. Ein erster Bediendruck wird in Abhängigkeit einer gewünschten und/oder benötigten Zugkraft am Griff 15 (Deckel 12 zum Rahmen 11 hinziehen) am Ventil 14 eingestellt. Ein zweiter Bediendruck wird in Abhängigkeit einer gewünschten und/oder benötigten Druckkraft am Griff 15 (Deckel 12 vom Rahmen 11 wegdrücken) am Ventil 14 eingestellt. Der variable Aussteller ist ohne Bedienelement (siehe oben).

Es sei an dieser Stelle bemerkt, dass die Erfindung nicht auf die speziell dargestellten Ausführungsvariante eingeschränkt ist, sondern Variationsmöglichkeiten aufgrund der Lehre zum technischen Handeln durch gegenständliche Erfindung im Können des auf diesem technischen Gebiet tätigen Fachmannes liegt. So kann die Erfindung bei allen Arten von Fahrzeugen (Land, Wasser und Luft) sowie im Bereich Gebäude- oder Anlagenbau eingesetzt werden.

Der Schutzbereich ist durch die Ansprüche bestimmt. Die Beschreibung und die Zeichnung sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden. Die Figur ist daher schematisch und wenn nicht explizit anders angegeben, können keine Größenbezüge aus ihnen abgeleitet werden.

### Bezugszeichenliste

- 10: Dachluken- bzw. Deckslukenvorrichtung bzw. Lukenvorrichtung
- 11: Rahmen
- 12: Deckel
- 13: variabler Aussteller
- 14: Ventil
- 15: Griff
- 16: Scharnier

## Patentansprüche

1. Dachlukenvorrichtung (10), umfassend einen Rahmen (11) und einen damit beweglich verbundenen Deckel (12), einen variablen Aussteller (13) mit zumindest einem Ventil (14), der mit dem Rahmen und dem Deckel verbunden ist und einen mit dem Deckel verbundenen Griff (15), wobei ein erster Bediendruck des Ventils in Abhängigkeit von einer Bedienkraft am Griff eingestellt ist.

2. Dachlukenvorrichtung (10) nach Anspruch 1, wobei ein erster Bediendruck des Ventils (14) in Abhängigkeit von einer Zugkraft am Griff (15) eingestellt ist und ein zweiter Bediendruck des Ventils (14) in Abhängigkeit von einer Druckkraft am Griff eingestellt ist.

## Claims

1. Roof hatch device (10), comprising a frame (11) and a lid (12) which is movably connected thereto, a variable stay (13) with at least one valve (14) which is connected to the frame and the lid, and a handle (15) connected to the lid, wherein a first operating pressure of the valve is set as a function of an operating force on the handle.

2. Roof hatch device (10) according to claim 1, wherein a first operating pressure of the valve (14) is set as a function of a tensile force on the handle (15) and a second operating pressure of the valve (14) is set as a function of a compressive force on the handle.

## Revendications

1. Dispositif de trappe de toit (10), comprenant un cadre (11) et un couvercle (12) relié de manière mobile à celui-ci, un compas variable (13) avec au moins une valve (14) relié au cadre et au couvercle, et une poignée (15) reliée au couvercle, une première pression de manœuvre de la valve étant réglée en fonction d'une force de manœuvre exercée sur la poignée.

2. Dispositif de trappe de toit (10) selon la revendication 1, dans lequel une première pression de manœuvre de la valve (14) est réglée en fonction d'une force de traction exercée sur la poignée (15) et une deuxième pression de manœuvre de la valve (14) est réglée en fonction d'une force de compression exercée sur la poignée.
